# EUROPEAN PATENT APPLICATION

(11) **EP 1 164 671 A1**
(43) Date of publication of application: **19.12.2001**
(21) Application number: 01202138.2
(22) Date of filing: 05.06.2001
(51) Int. Cl.: H02B 1/01

(54) **Structural element for the frame of an electrical switchboard**

(30) Priority: 12.06.2000 IT MI001313
(71) Applicant: ABB Ricerca SpA, 20099 Sesto San Giovanni (MI) (IT)
(72) Inventor: Fontana, Rodolfo, 21050 Clivio (VA) (IT); Cagliani, Christian, 23847 Molteno (LC) (IT)
(74) Representative: Giavarini, Francesco

(57) **Abstract**

An element for the frame of an electrical switchboard, having a profiled body which, seen in transverse cross-section, has a first wall and a second wall which are arranged transversely to each other and are connected by at least one third wall, a plurality of holes being provided along the longitudinal extension of the first and second walls, the holes being suitable to accommodate means for fixing with additional components of the switchboard, whose particularity consists of the fact that at least some of the holes provided in the first and/or second walls have a protruding rim which protrudes transversely to the surface of the corresponding wall.

## Description

The present invention relates to a structural element for the frame of an electrical switchboard.

It is known that electrical switchboards for distribution and automation have a supporting frame which is suitable to provide structural support for the various components of the switchboard that are functionally connected thereto, such as fixing guides, electrical devices, cladding and/or protective switchboards, doors for opening/closing said switchboards, et cetera.

In their typical embodiment, supporting frames have a structure which is shaped like a parallelepiped and is constituted by profiled elements which are arranged substantially horizontally, commonly known as cross-members or rails, and by profiled elements which are arranged vertically and are known as uprights; these profiled elements are mutually connected by virtue of appropriate connecting means, such as multiway corner joints.

In order to functionally connect the various components of the switchboard to the supporting frame, holes suitable to receive means for fixing the components are provided along the longitudinal extension of the profiled elements, mainly the uprights. Currently, the holes are aligned in one or more rows along which there is a regular alternation of circular holes and square holes; this is due to the fact that the coupling that is established between ordinary fixing screws, which are widely used in practice, and the wall of the corresponding profiled element ensures an adequate resistance to mechanical stresses, and particularly to shear and traction stresses, up to a certain load; accordingly, particular types of nut, known in the art as cage nuts, are used alongside the screws and are appropriately inserted in the square holes. In particular, said cage nuts comprise a quadrangular nut with which a metal plate provided with lateral wings is associated, partially surrounding said nut; the assembly constituted by the nut and the plate is inserted in the square hole so that the wings couple geometrically to the walls of the hole. A screw is then inserted in the nut during assembly.

In the current state of the art, this solution, despite adequately ensuring the connection of the various components and their structural support, has drawbacks and disadvantages.

In particular, the need to provide two different types of hole complicates the steps for the production of the uprights, with a consequent negative impact on production times and costs. These production costs are further increased by the need to produce and use both fixing screws and cage nuts, which are inherently significantly expensive and furthermore require the management of additional inventory codes.

Moreover, the fact should not be ignored that the use of said cage nuts is particularly laborious in practice and increases the time required to assemble the switchboard; during assembly, the nut must in fact be held in the correct position, preventing it from falling into the profiled element, which would entail losing the nut in the case of profiled elements having a closed transverse cross-section. Disassembly operations are equally difficult and complicated if one wishes, for any reason, to change the previously provided switchboard configuration.

The aim of the present invention is to provide an element for the frame of an electrical switchboard which allows to obviate the drawbacks of the prior art. Within the scope of this aim, a particular object of the present invention is to provide an element for the frame of an electrical switchboard which allows to reduce production times and costs and facilitates the mounting steps during switchboard assembly.

Another object of the present invention is to provide an element for the frame of an electrical switchboard which allows to reduce the required constructive components, particularly as regards the connections among the various components of the switchboard and the frame itself, with a consequent benefit from the economic point of view and a reduction in the number of inventory codes to be managed.

Another object of the present invention is to provide an element for the frame of an electrical switchboard which is highly reliable, relatively easy to manufacture and at competitive costs.

This aim, these objects and others which will become apparent hereinafter are achieved by an element for the frame of an electrical switchboard, having a profiled body which, seen in transverse cross-section, has a first wall and a second wall which are arranged transversely to each other and are connected by at least one third wall, a plurality of holes being provided along the longitudinal extension of said first and second walls, said holes being suitable to accommodate means for fixing with additional components of the switchboard, characterized in that at least some of the holes provided in said first and/or second walls have a protruding rim which protrudes transversely to the surface of the corresponding wall.

Further characteristics and advantages of the invention will become apparent from the description of preferred but not exclusive embodiments of the supporting frame according to the invention, illustrated only by way of non-limitative example in the accompanying drawings, wherein:
Figure 1 is a perspective view of a first embodiment of an element for the frame of an electrical switchboard according to the invention;
Figure 2 is a transverse sectional view of a second embodiment of the element for the frame of an electrical switchboard according to the invention;
Figure 3 is a longitudinal sectional view of the element for the frame of an electrical switchboard according to the invention.

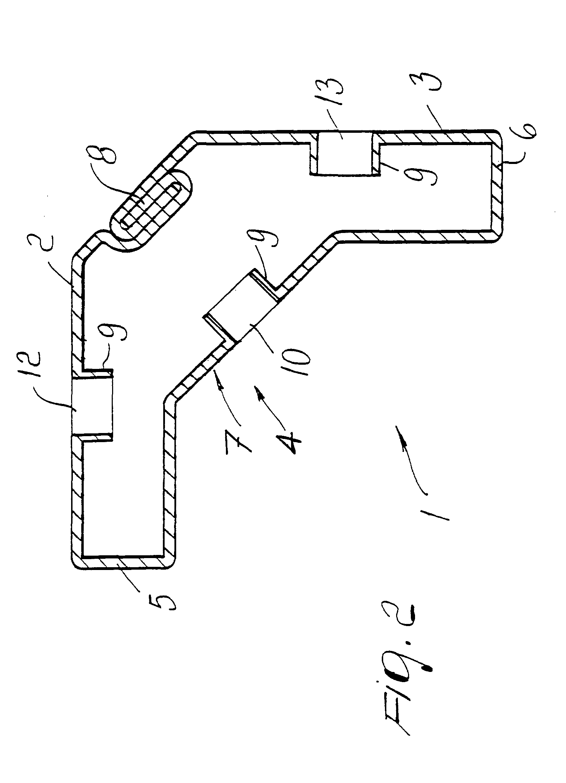

With reference to the above cited figures, the frame element according to the invention, generally designated by the reference numeral 1, has a profiled longitudinally elongated body which is preferably formed by a single metal plate which is folded appropriately; said profiled body, seen in the transverse cross-section shown in detail in Figure 2, has a first wall 2 and a second wall 3 which are arranged transversely to each other. In the illustrated embodiment, the first wall 2 and the second wall 3 are arranged at right angles to each other; alternatively, and according to the various application requirements, the walls 2 and 3 can be orientated with different angles with respect to each other.

The two walls 2 and 3 are geometrically interconnected by at least one third wall 4; in the illustrated embodiment, the third wall 4 has two L-shaped portions 5 and 6, each of which has an end which protrudes from the corresponding walls 2 and 3, and a central portion 7, which is inclined with respect to the walls 2 and 3 and is interposed between the two L-shaped portions; holes 10 are provided in said inclined portion 7 and are suitable to accommodate fixing means, for example with hinges for the connection of a door for opening/closing the switchboard. Furthermore, in a preferred embodiment shown in Figure 2, the profiled body has a fourth wall 8 which joins the two walls 2 and 3 on the opposite side with respect to the wall 4, so as to provide a closed profile. This increases the structural rigidity of said element.

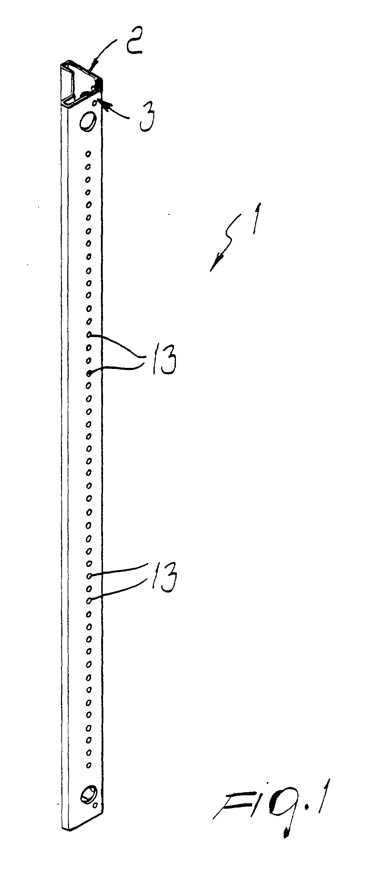

As an alternative, the body of the element 1 might have an open profile, as shown for example in Figure 1 in which the presence of the wall 8 is not foreseen; furthermore, the geometric configuration of the walls also might be changed in order to meet various application requirements. For example, the third wall 4 might be constituted by a single oblique portion or might have waved portions so as to accommodate means for providing a seal with doors and cladding switchboards.

Along the longitudinal extension of both walls 2 and 3 there is a plurality of holes 12 and 13 which are suitable to accommodate means for fixing with additional components of the switchboard, for example fixing guides on which the electrical devices of the switchboard are mounted, or transverse structural elements to which said fixing guides are connected.

Advantageously, in the element 1 according to the invention at least some of the holes provided in the first wall 2 and/or in the second wall 3 have a protruding rim 9 which protrudes transversely from the surface of the corresponding wall toward the internal part of the profile. In particular, according to a preferred embodiment, all the holes 12 and/or all the holes 13 provided in the walls 2 and 3 have a corresponding protruding rim 9; furthermore, all the holes 12 and 13 are circular holes. In this manner, during mounting one has great freedom in positioning the components to be fixed to the element along its longitudinal extension.

Furthermore, at least one of the holes 10 provided in the inclined portion 7 can have a protruding rim 9 which protrudes transversely to the surface of said inclined portion.

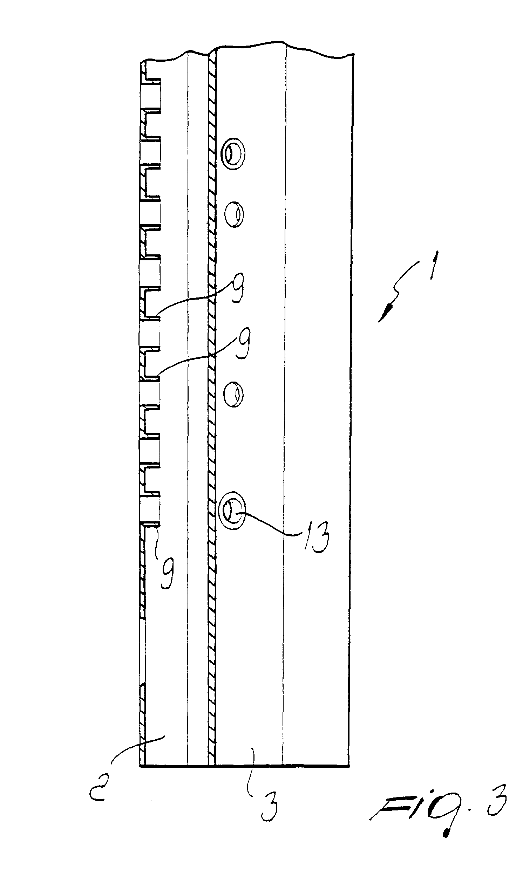

As shown in Figures 2 and 3, each protruding rim 9 has a hollow cylindrical body whose axis is substantially parallel to the axis of the corresponding hole and protrudes substantially at right angles to the surface of the corresponding wall 2 or 3 toward the inclined portion 7.

Advantageously, the element 1 can be used to provide the frame both as an upright and as a cross-member, and it is therefore possible to provide a frame which is provided exclusively by profiled elements 1 according to the present invention.

The element 1 according to the invention allows to obtain a series of advantages with respect to the known art.

In particular, the presence of the protruding rims 9 allows to use, as fixing means, exclusively self-tapping screws which screw into the internal surfaces of its cylindrical body; with this solution, the rims 9 in fact offer the self-tapping screws a surface which is suitable for correct coupling and for optimized distribution of the mechanical stresses to which they are subjected. This allows to increase, with respect to the known art, the stress levels that each coupling between the screw and the wall of the element 1 can withstand and also allows to optimize the thickness of the walls of the element 1; moreover, the operations for mounting/removing the various components with respect to said element 1 are facilitated considerably.

Furthermore, the element 1, by having a single type of hole, requires a single hole forming operation, for example a punching operation. Accordingly, the steps for the production of said elements 1 are simplified, with a benefit in terms of costs.

Finally, said costs are further reduced by the fact that the use of cage nuts becomes unnecessary, consequently reducing the required constructive components and the corresponding inventory codes to be managed.

The frame element thus conceived is susceptible of numerous modifications and variations, all of which are within the scope of the inventive concept; all the details may furthermore be replaced with other technically equivalent elements. In practice, the materials, as well as the dimensions, may be any according to the requirements and the state of the art.

## Claims

1. An element for the frame of an electrical switchboard, having a profiled body which, seen in transverse cross-section, has a first wall and a second wall which are arranged transversely to each other and are connected by at least one third wall, a plurality of holes being provided along the longitudinal extension of said first and second walls, said holes being suitable to accommodate means for fixing with additional components of the switchboard, **characterized in that** at least some of the holes provided in said first and/or second walls have a protruding rim which protrudes transversely to the surface of the corresponding wall.

2. The frame element according to claim 1, **characterized in that** all the holes provided in said first wall have said protruding rim.

3. The frame element according to one or more of the preceding claims, **characterized in that** all the holes provided in said second wall have said protruding rim.

4. The frame element according to one or more of the preceding claims, **characterized in that** all the holes provided in said first and/or second walls are circular holes.

5. The frame element according to one or more of the preceding claims, **characterized in that** each protruding rim has a hollow cylindrical body whose axis is substantially parallel to the axis of the corresponding hole.

6. The frame element according to one or more of the preceding claims, **characterized in that** said first and second walls are mutually perpendicular and **in that** said third wall has at least one portion which is inclined with respect to said first and second walls and in which there are holes which are suitable to accommodate fixing means, said rims protruding substantially at right angles to the surface of said first and/or second walls toward said inclined portion.

7. The frame element according to claim 6, **characterized in that** at least one of the holes provided in said inclined portion has a rim which protrudes transversely to the surface of said inclined portion.

8. The frame element according to one or more of the preceding claims, **characterized in that** said profiled body, seen in transverse cross-section, has a fourth wall for mutually connecting said first and second walls so as to provide a closed profile.

9. The frame element according to one or more of the preceding claims, **characterized in that** it is an upright or a cross-member.

10. A cabinet of an electrical switchboard, comprising a frame having a plurality of structural elements which are mutually coupled so as to provide a configuration which is substantially shaped like a parallelepiped, **characterized in that** at least one of said structural elements is a structural element according to one or more of claims 1 to 9.
